# EUROPÄISCHE PATENTSCHRIFT

(11) **EP 1 068 117 B1**
(45) Veröffentlichungstag und Bekanntmachung des Hinweises auf die Patenterteilung: **07.08.2002**
(21) Anmeldenummer: 99913309.3
(22) Anmeldetag: 26.03.1999
(51) Int. Cl.: B60T 7/10, B60T 13/74

(54) **ELEKTRISCHE FESTSTELLBREMSANLAGE**
ELECTRIC PARKING BRAKE SYSTEM
SYSTEME DE FREIN DE STATIONNEMENT ELECTRIQUE

(30) Priorität: 31.03.1998 DE 19814303; 11.02.1999 DE 19905663
(43) Veröffentlichungstag der Anmeldung: 17.01.2001
(73) Patentinhaber: Continental Teves AG & Co. oHG, 60488 Frankfurt am Main (DE)
(72) Erfinder: KANT, Bernhard, D-65239 Hochheim (DE); SKOTZEK, Peter, D-60439 Frankfurt am Main (DE)
(86) Internationale Anmeldenummer: EP9902095
(87) Internationale Veröffentlichungsnummer: WO9950111

(56) Entgegenhaltungen:
- EP-A- 0 729 871
- DE-C- 19 744 356
- US-A- 4 561 527
- US-A- 4 660 696

## Beschreibung

Die vorliegende Erfindung betrifft eine elektrische Feststellbremsanlage für Kraftfahrzeuge gemäß dem Oberbegriff des Anspruchs 1.

Gemäß dem Stand der Technik werden Feststellbremsen für Kraftfahrzeuge üblicherweise mechanisch bedient. Diese mechanisch betätigten Feststellbremsen funktionieren unabhängig von der elektrischen Energieversorgung des Kraftfahrzeuges. Mechanisch betätigte Feststellbremsen erfordern einen relativ großen mechanischen Aufwand, wie z. B. einen Seilzug vom Handbremshebel zu den betätigten Bremsen, zusätzliche innenliegende Bremsbacken bei Verwendung von Topfhandbemsen usw.. In der Entwicklung befinden sich derzeit elektrisch betätigte Feststellbremsen (EPB = Electric Parking Brake). Diese sind in der Lage, den mechanischen Aufwand für die Feststellbremse zu verringern und weiterhin den Montageaufwand für das Fahrzeug am Band zu reduzieren. Eine elektrische Feststellbremse kann komplett vom Systemlieferanten an die Produktionslinie des Automobilherstellers geliefert werden und muß nur montiert, aber nicht aufwendig eingestellt werden. Weiterhin erhöhen elektrisch betätigte Feststellbremsen den Bedienungskomfort eines Kraftfahrzeuges, erweitern die Möglichkeiten bei der Achskonstruktion und erschließen neue Zusatzfunktionen für die Fahrzeugsteuerung, insbesondere die koordinierte Regelung und Steuerung der Bremsfunktion. Überdies kann der durch den Wegfall eines Betätigungshebels entstehende Bauraum im Fahrgastinnenraum vom Fahrzeughersteller für andere Austattungsmerkmale genutzt werden.

Aus der US-A-4 561 527 ist eine elektrische Feststellbremsanlage für Kraftfahrzeuge bekannt, die sowohl manuell als auch automatisch ein Zuspannen bzw. Lösen der angesteuerten Radbremsen bewirken kann. Insbesondere enthält die elektrische Feststellbremsanlage mehrere elektrische Schalter die einen Wechsel zwischen manueller und automatischer Betätigung der Feststellbremsanlage bewirken können.

Ein Nachteil bekannter elektrisch betätigter Feststellbremsen besteht jedoch darin, daß diese von der Energieversorgung im Kraftfahrzeug und von der Funktionsfähigkeit der Steuereinrichtung abhängig sind. Fällt diese Energieversorgung oder die Steuereinrichtung aus, so ist auch die Funktion der Feststellbremse nicht mehr gewährleistet.

Die Aufgabe der vorliegenden Erfindung besteht daher darin, die Nachteile des Standes der Technik zu vermeiden, und insbesondere eine elektrische Feststellbremse für Kraftfahrzeuge zu schaffen, die auch bei einer defekten oder ausgefallenen Steuereinrichtung bzw. Übertragungseinrichtung betriebsfähig ist.

Die erfindungsgemäße Aufgabe wird bei einer elektrischen Feststellbremsanlage für Kraftfahrzeuge der eingangs genannten Art durch Kombination der im Anspruch 1 angegebenen Merkmale gelöst. Der Kerngedanke der vorliegenden Erfindung besteht in der Umgehung der ersten Betätigungseinrichtung (für die Feststellbremsfunktion) und großer Teile der Übertragungseinrichtung mit einer weiteren Betätigungseinrichtung, um mindestens einen Aktor für die Radbremse (direkt) aus dem Bordnetz mit Energie zu versorgen. Dabei ist das weitere Betätigungselement bevorzugt eine, zwischen der Fahrzeugbatterie und dem wenigstens einen Aktor angeordnete Schalteinrichtung.

Ein Vorteil der vorliegenden Erfindung besteht darin, daß die erfindungsgemäße elektrische Feststellbremsanlage die gesetzlichen Zulassungsbestimmungen für Kraftfahrzeuge (ECE R13.09) erfüllt, ohne das Vorsehen einer mechanischen Not-betätigungseinrichtung erforderlich zu machen. Bei einem Totalausfall der elektrischen Steuereinrichtung (ECU = E-lectronic Control Unit) kann die weitere Betätigungseinrichtung die Bremse als Noteinrichtung zumindest zuspannen. Die Verfügbarkeit der elektrischen Feststellbremse ist dadurch erhöht.

Vorteilhafterweise ist die Schalteinrichtung eine zwei-polige Umschalteinrichtung bzw. ein Taster oder Wipptaster. Auf diese Weise kann die Stromrichtung im Aktor umgedreht werden, was z. B. in einem Fall erforderlich ist, wenn die Aktoren Gleichstrommotoren aufweisen.

Um die Aktoren bzw. die Motoren und weitere mechanische Einrichtungen vor Überlastung zu schützen, ist bevorzugt, daß das weitere Betätigungselement eine Strombegrenzungseinrichtung aufweist.

Vorteilhafterweise weist das weitere Betätigungselement eine, insbesondere zeitgesteuerte, Abschalteinrichtung auf, um einen Verschleiß und eine Überlastung der Aktoren und/oder weiterer Komponenten des Systems zu vermeiden.

Um die gesetzlichen Zulassungsbestimmungen für Kraftfahrzeuge (ECE R13.09) zu erfüllen, ist bevorzugt, daß die Steuereinrichtung mit einer Hilfsbatterie oder einer sonstigen eigenständigen Energieversorgungseinheit gekoppelt ist. Dadurch kann bei einem Ausfall der Energieversorgung die elektrische Feststellbremse weiterhin vom Fahrersitz aus bedient werden.

In einer bevorzugten Variante der Erfindung ist zwischen der Steuereinrichtung und dem wenigstens einem Aktor ein erstes Sicherungselement vorgesehen. Insbesondere in Verbindung mit wenigstens einem weiteren Sicherungselement, das zwischen dem wenigstens einen weiteren Betätigungselement und dem wenigstens einen Aktor verbunden ist, ergibt sich die, aus Sicherheitsgründen vorteilhafte, Trennung der erfindungsgemäß vorgesehenen Stromkreise im Falle eines Kurzschlusses.

Zur Erhöhung der Zuverlässigkeit der erfindungsgemäßen e-lektrischen Feststellbremsanlage sind die Sicherungselemente vorzugsweise selbstrückstellend. Die Sicherungselemente können beispielsweise auf Basis leitender Polymere (z.B. PolySwitch™) ausgebildet sein. Ferner könne auch entsprechend gestaltete elektronische Schaltkreise als Sicherungselemente zum Einsatz kommen.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnungen. In den Zeichnungen zeigen:
- Fig. 1: eine schematische Darstellung des Aufbaus einer elektrischen Feststellbremsanlage;
- Fig. 2: eine schematische Darstellung eines ersten Ausführungsbeispieles der erfindungsgemäßen elektrischen Feststellbremsanlage; und
- Fig. 3: eine schematische Darstellung eines zweiten Ausführungsbeispiels der erfindungsgemäßen elektrischen Feststellbremsanlage.

Überall in den Zeichnungen bezeichnen dieselben Bezugszeichen dieselben bzw. entsprechenden Elemente.

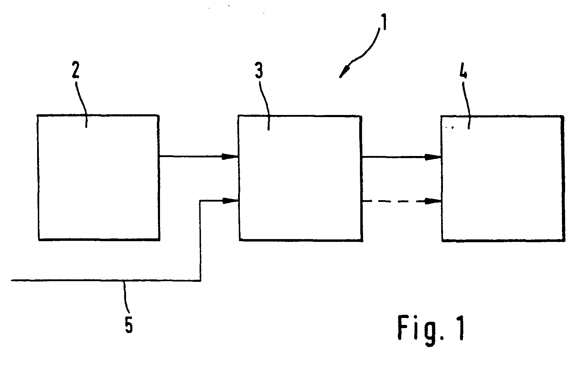

In Fig. 1 ist schematisch der Aufbau einer elektrischen Feststellbremsanlage 1 (EPB = Electric Parking Brake) dargestellt. Die elektrische Feststellbremsanlage 1 weist ein erstes Betätigungselement 2 auf, welches mit einer Steuereinrichtung (Electric Control Unit = ECU) 3 verbunden ist. Durch die Steuereinrichtung 3 werden die Ansprüche an eine sichere Bedienung unter verschiedenen Fahrzuständen eines Kraftfahrzeugs erfüllt. Über das erste Betätigungselement 2 kann der Fahrer eine Anforderung für eine Betätigung der elektronischen Feststellbremse 1 über die Betätigung beispielsweise eines Knopfes, Schalters, Tasters, Wipptasters, usw. angeben. Das erste Betätigungselement 2 kann auch einen analogen Fahrerwunsch abbilden, z. B. mit einem Potentiometer oder einer anderen, dazu geeigneten Anordnung. Natürlich kann anstatt des Betätigungselementes 2 auch ein Anforderungssignal von einer Fahrzeugsteuerung verwendet werden. Durch das erste Betätigungselement 2 kann daher ein Fahrer Eingangssignale an die Steuereinrichtung 3 vorgeben, die anschließend von der Steuereinrichtung 3 in entsprechende Ausgangssignale umgewandelt werden und an einen oder mehrere Aktor(en) 4 geliefert werden. Die Aktoren 4 weisen beispielsweise elektrische Motoren auf, welche eine übliche Radbremse betätigen. Alternativ können die Aktoren 4 als elektromechanisch betätigte Verriegelungseinrichtungen ausgebildet sein, welche die Fahrzeugräder im Stillstand des Fahrzeugs blockieren, z. B. wenn der Fahrer das Kraftfahrzeug verlassen möchte. Über eine schematisch dargestellte Verbindung 5 ist die Steuereinrichtung 3 mit einer (nicht dargestellten) Fahrzeugbatterie, d. h. mit dem elektrischen Bordnetz, verbunden.

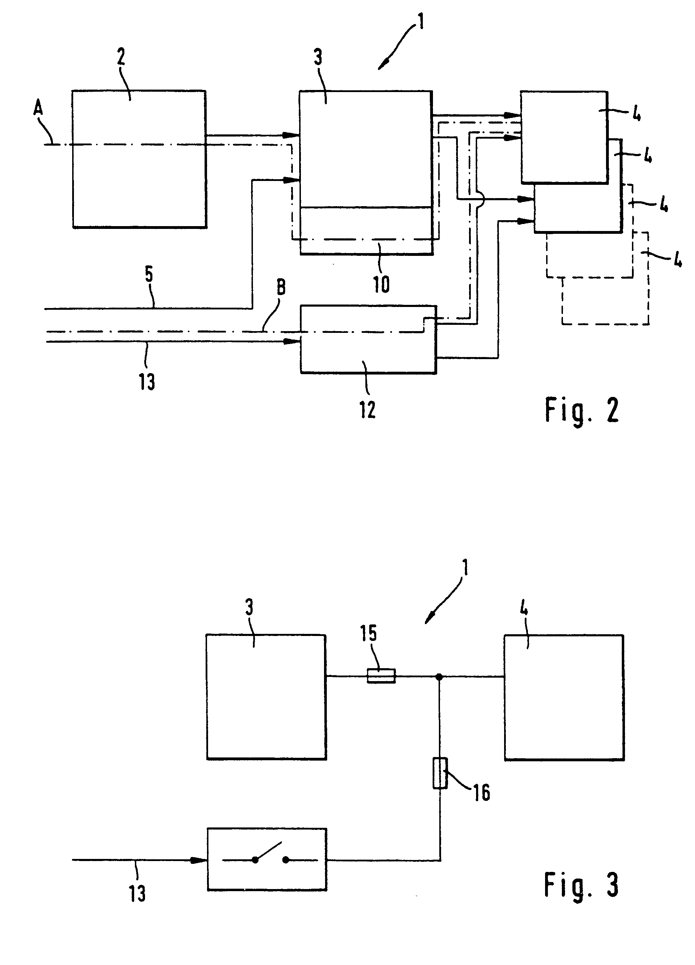

In Fig. 2 ist schematisch ein erstes Ausführungsbeispiel der erfindungsgemäßen elektrischen Feststellbremsanlage 1 dargestellt. Im Unterschied zu der elektrischen Feststellbremse gemäß Fig. 1 weist im vorliegenden Ausführungsbeispiel die Steuereinrichtung 3 einen zusätzlichen, eigenständigen Energiespeicher oder eine Hilfsbatterie 10 auf. Als Hilfsbatterie 10 wird vorzugsweise eine Lithium-Batterie verwendet, wie sie in der Deutschen Patentanmeldung 197 58 289.3 beschrieben ist. Ferner entnimmt man der Darstellung der Fig. 2, daß ein zweites Betätigungselement 12 zusätzlich zu dem ersten Betätigungselement 2 vorgesehen ist. Das zweite Betätigungselement 12 ist über eine schematisch dargestellte Verbindung 13 mit der Fahrzeugbatterie verbunden. Über das zweite Betätigungselement 12 wird ein Fahrerwunsch direkt, d. h. ohne eine Steuereinrichtung, insbesondere nach Art der Steuereinrichtung 3, an einen oder mehrere Aktor(en) 4 geliefert. In Fig. 2 sind zwei Aktoren 4 mit Verbindungen dargestellt. Zwei weitere, optionale Aktoren 4 sind ohne Verbindungen schematisch gestrichelt angedeutet. Das zweite Betätigungselement 12 ist vorzugsweise als ein Schalter ausgebildet, der zusätzliche Elektronik, insbesondere eine Strombegrenzungsschaltung und/oder eine zeitgesteuerte Abschaltungseinrichtung aufweist, um die Motoren und die Mechanik vor Überlastung oder Beschädigung zu schützen. Wenn es notwendig ist die Stromrichtung im Aktor 4 umzukehren, z. B. bei Gleichstrommotoren, ist das zweite Betätigungselement 12 als zwei-polige Umschalteinrichtung ausgebildet. Durch das zweite Betätigungselement 12 ist daher das Bordnetz über einen Schalter direkt bzw. unmittelbar mit den Aktor(en) 4 verbunden.

Bei einem Ausfall des Bordnetzes erfolgt die Energieversorgung der Steuereinrichtung 3, sowie der Aktoren 4 über die Hilfsbatterie 10 bzw. die eigenständige Energieversorgungseinrichtung . Ein Signal-/Energiefluß bei ausgefallenem Bordnetz für einen Aktor 4 ist schematisch durch die strichpunktierte Linie A angezeigt. Falls die elektronische Steuereinrichtung 3 und/oder die Kabelverbindungen zur Kabelversorgung und zu den Aktoren 4, die zusammenfassend auch als Übertragungseinrichtung bezeichnet werden können, defekt ist, können die Aktoren 4 unmittelbar durch das zweite Betätigungselement 12 angesteuert werden. Ein Signal-/Energiefluß bei ausgefallener Übertragungseinrichtung, d.h. unter Umständen einschließlich der Steuereinrichtung 3, für einen Aktor 4 ist schematisch durch die strichpunktierte Linie B angezeigt. Ferner kann auch die Hilfsbatterie 10 oder eine zusätzliche Energieversorgung mit dem weiteren Betätigungselement 12 gekoppelt sein um einem gleichzeitigen Ausfall von Bordnetz und der Übertragungseinrichtung, insbesondere der Steuereinrichtung 3, Rechnung zu tragen. In einem solchen Fehlerfall erfolgt somit die Energieversorgung des zweiten Betätigungselementes 12 durch die Hilfsbatterie 10.

In Fig. 3 ist nun ein zweites Ausführungsbeispiel der vorliegenden Erfindung schematisch dargestellt. Man entnimmt der Fig. 3, daß, in Erweiterung der elektrischen Feststellbremsanlage gemäß Fig. 2, in den elektrischen Verbindungen zwischen der Steuereinrichtung 3 und dem Aktor 4 ein Sicherungselement 15 vorgesehen ist. Das Vorsehen des Sicherungselements 15 in den elektrischen Verbindungen der primären Übertragungseinrichtung von der Steuereinrichtung 3 zu dem Aktor 4 dient dazu, diese Stromkreise im Falle eines in der Steuereinrichtung 3 vorhandenen Kurzschlusses von der zusätzlichen Übertragungseinrichtung, insbesondere von dem weiteren Betätigungselement 12 zu trennen. Ein weiteres Sicherungselement 16 ist in der elektrischen Verbindung zwischen dem zweiten Betätigungselement 12 und dem Aktor 4 vorgesehen. Es sei bemerkt, daß gemäß dem Ausführungsbeispiel nach Fig. 3 nur ein Aktor 4 zeichnerisch dargestellt ist. Statt des einen Aktors 4 kann ebenfalls eine Vielzahl von Aktoren 4 vorgesehen sein. Im Fall von mehreren Aktoren 4 ist vorzugsweise eine entsprechende Vielzahl von Sicherungselementen 15, 16 vorgesehen, so daß ein Stromkreis mit Kurzschluß jeweils von den aus Redundanzgründen vorgesehenen Ersatzstromkreis bzw. Ersatzstromkreisen entkoppelt wird. Entsprechendes gilt bei Verwendung von mehreren, weiteren Betätigungselementen 12.

Es sei bemerkt, daß die Sicherungselemente 15, 16 als herkömmliche Schmelzsicherungen ausgebildet sein können. Zur Erhöhung der Zuverlässigkeit des Systems werden aber vorteilhafterweise selbstrückstellende Sicherungselemente, z. B. auf Basis leitender Polymere (PolySwitch™), verwendet. Ferner können auch entsprechend ausgebildete elektronische Schaltkreise als Sicherungselemente 15, 16 zum Einsatz kommen.

### Bezugszeichenliste:

- 1: elektrische Feststellbremsanlage
- 2: erstes Betätigungselement
- 3: Steuereinrichtung
- 4: Aktor(en)
- 5: Verbindung
- 10: Hilfsbatterie oder zusätzlicher Hilfsspeicher
- 12: zweites bzw. weiteres Betätigungselement
- 13: Verbindung
- 15: erstes Sicherungselement
- 16: zweites bzw. weiteres Sicherungselement
- A, B: strichpunktierte Linien für Signal-/Energiefluß

## Patentansprüche

1. Elektrische Feststellbremsanlage (1) für Kraftfahrzeuge mit einem ersten Betätigungselement (2), welches mit einer Steuereinrichtung (3) gekoppelt ist, wobei die Steuereinrichtung (3) mit wenigstens einem Aktor (4) zur Betätigung einer Radbremse gekoppelt ist, und mit wenigstens einem weiteren Betätigungselement (12), **dadurch gekennzeichnet, daß** das weitere Betätigungselement (12) als eine zwischen einer elektrischen Energieversorgungseinheit (10) und dem wenigstens einen Aktor (4) angeordnete Schalteinrichtung (12) ausgebildet ist, mittels der der Aktor (4) für die Radbremse direkt mit Energie versorgt werden kann, indem die weitere Schalteinrichtung (12) an die elektrische Energieversorgungseinheit des Bordnetzes, insbesondere die Fahrzeugbatterie, sowie an den Aktor (4) gekoppelt ist.

2. Elektrische Feststellbremsanlage (1) nach Anspruch 1, **dadurch gekennzeichnet, daß** die Schalteinrichtung (12) eine zwei-polige Umschalteinrichtung ist.

3. Elektrische Feststellbremsanlage (1) nach einem der vorhergehenden Ansprüche, **dadurch gekennzeichnet, daß** das weitere Betätigungselement (12) eine Strombegrenzungseinrichtung aufweist.

4. Elektrische Feststellbremsanlage (1) nach einem der vorhergehenden Ansprüche, **dadurch gekennzeichnet, daß** das weitere Betätigungselement (12) eine, insbesondere zeitgesteuerte, Abschalteinrichtung aufweist.

5. Elektrische Feststellbremsanlage (1) nach einem der vorhergehenden Ansprüche, **dadurch gekennzeichnet, daß** die Steuereinrichtung (3) mit einer vom Bordnetz unabhängigen zweiten Energieversorgungseinrichtung, insbesondere Hilfsbatterie (10), gekoppelt ist.

6. Elektrische Feststellbremsanlage (1) nach einem der vorhergehenden Ansprüche, **dadurch gekennzeichnet, daß** das weitere Betätigungselement mit einer vom Bordnetz unabhängigen zweiten Energieversorgungseinrichtung, insbesondere Hilfsbatterie (10), gekoppelt ist

7. Elektrische Feststellbremsanlage (1) nach einem der vorhergehenden Ansprüche, **gekennzeichnet durch** ein zwischen der Steuereinrichtung (3) und dem wenigstens einen Aktor (4) verbundenen ersten Sicherungselement (15).

8. Elektrische Feststellbremsanlage (1) nach einem der vorhergehenden Ansprüche, **gekennzeichnet durch** wenigstens ein weiteres Sicherungselement (16), das zwischen dem wenigstens einen weiteren Betätigungselement (12) und dem wenigstens einen Aktor (4) verbunden ist.

9. Elektrische Feststellbremsanlage (1) nach Anspruch 7 oder 8, **dadurch gekennzeichnet, daß** die Sicherungselemente (15, 16) selbstrückstellend sind.

## Claims

1. Electric parking brake system (1) for automotive vehicles with a first actuating element (2) being coupled to a control unit (3), wherein the control unit (3) is coupled to at least one actuator (4) for actuating a wheel brake, and with at least one additional actuating element (12),
**characterized in that** the additional actuating element (12) is a switching device (12) arranged between an electrical power supply unit (10) and the at least one actuator (4), by means of which device the actuator (4) for the wheel brake can be directly supplied with power, because the additional switching device (12) is coupled to the electrical power supply unit of the supply system, especially the vehicle battery, as well as to the actuator (4).

2. Electric parking brake system (1) according to. claim 1,
**characterized in that** the switching device (12) is a two-pole commutator.

3. Electric parking brake system (1) according to any one of the preceding claims,
**characterized in that** the additional actuating element (12) includes a current limiting device.

4. Electric parking brake system (1) according to any one of the preceding claims,
**characterized in that** the additional actuating element (12) includes a switching-off device, especially a time-controlled one.

5. Electric parking brake system (1) according to any one of the preceding claims,
**characterized in that** the control unit (3) is coupled to a second power supply device, especially an auxiliary battery (10), which is independent from the supply system of the vehicle.

6. Electric parking brake system (1) according to any one of the preceding claims,
**characterized in that** the additional actuating element is coupled to a second power supply device, especially an auxiliary battery (10), which is independent from the supply system of the vehicle.

7. Electric parking brake system (1) according to any one of the preceding claims,
**characterized by** a first fuse element (15) connected between the control unit (3) and the at least one actuator (4).

8. Electric parking brake system (1) according to any one of the preceding claims,
**characterized by** at least one additional fuse element (16) connected between the at least one additional actuating element (12) and the at least one actuator (4).

9. Electric parking brake system (1) according to claim 7 or 8,
**characterized in that** the fuse elements (15, 16) are self-resetting.

## Revendications

1. Système (1) de frein électrique de stationnement pour véhicules automobiles ayant un premier élément (2) de manoeuvre qui est couplé à un dispositif (3) de commande, dans lequel le dispositif (3) de commande est couplé à au moins un actionneur (4) pour actionner un frein de roue, et ayant au moins un autre élément (12) de manoeuvre, **caractérisé en ce que** l'autre élément (12) de manoeuvre est constitué comme un dispositif (12) de commutation, qui est disposé entre un dispositif (10) d'alimentation en énergie électrique et ledit au moins un actionneur (4)et au moyen duquel l'actionneur (4) peut être alimenté directement en énergie pour actionner le frein de roue, l'autre dispositif (12) de commutation, étant couplé au dispositif d'alimentation en énergie électrique du réseau de bord, en particulier la batterie du véhicule, ainsi qu'à l'actionneur.

2. Système (1) de frein électrique de stationnement selon la revendication 1, **caractérisé en ce que** le dispositif (12) de commutation est un dispositif de commutation bipolaire.

3. Système (1) de frein électrique de stationnement selon l'une des revendications précédentes, **caractérisé en ce que** l'autre élément (12) de manoeuvre comporte un dispositif limiteur de courant.

4. Système (1) de frein électrique de stationnement selon la revendication 1, **caractérisé en ce que** l'autre élément (12) de manoeuvre comporte un dispositif de coupure, en particulier temporisé.

5. Système (1) de frein électrique de stationnement selon l'une des revendications précédentes, **caractérisé en ce que** le dispositif (3) de commande est couplé à un deuxième dispositif d'alimentation en énergie, en particulier une batterie auxiliaire (10), indépendant du réseau de bord.

6. Système (1) de frein électrique de stationnement selon l'une des revendications précédentes, **caractérisé en ce que** l'autre élément (12) de manoeuvre est couplé à un deuxième dispositif d'alimentation en énergie, en particulier une batterie auxiliaire (10), indépendant du réseau de bord.

7. Système (1) de frein électrique de stationnement selon l'une des revendications précédentes, **caractérisé par** un premier dispositif (15) de protection branché entre le dispositif (3) de commande et ledit au moins un actionneur (4).

8. Système (1) de frein électrique de stationnement selon l'une des revendications précédentes, **caractérisé par** un autre dispositif (16) de protection qui est relié entre ledit au moins un autre élément (12) de manoeuvre et ledit au moins un actionneur (4).

9. Système (1) de frein électrique de stationnement selon la revendication 7ou 8, **caractérisé en ce que** les dispositifs (15, 16) de protection sont à retour automatique à l'état initial.
